# EUROPÄISCHE PATENTSCHRIFT

(11) **EP 3 153 725 B1**
(45) Veröffentlichungstag und Bekanntmachung des Hinweises auf die Patenterteilung: **16.08.2023**
(21) Anmeldenummer: 16001904.8
(22) Anmeldetag: 31.08.2016
(51) Int. Cl.: F16F 1/373

(54) **VERFAHREN UND VORRICHTUNG ZUR BEFESTIGUNG EINES KUNSTSTOFFBAUTEILS AN EINEM TRAGENDEN BAUTEIL**
METHOD AND DEVICE FOR FIXING A PLASTIC COMPONENT TO A CARRYING COMPONENT
PROCEDE ET DISPOSITIF DE FIXATION D'UN COMPOSANT EN PLASTIQUE SUR UN COMPOSANT PORTEUR

(30) Priorität: 05.10.2015 DE 102015012869
(43) Veröffentlichungstag der Anmeldung: 12.04.2017
(73) Patentinhaber: MAN Truck & Bus SE, 80995 München (DE)
(72) Erfinder: Preis, Roland, 93351 Painten (DE); Heindl, Thomas, 81241 München (DE)
(74) Vertreter: v. Bezold & Partner Patentanwälte - PartG mbB

(56) Entgegenhaltungen:
- EP-A1- 2 230 410
- DE-A1- 19 948 868
- DE-A1-102008 050 143
- US-A1- 2003 030 201

## Beschreibung

Die Erfindung betrifft eine Befestigungsvorrichtung zur Befestigung eines Kunststoffbauteils an einem tragenden Bauteil. Die Erfindung betrifft ferner ein Verfahren zum Befestigen eines Kunststoffbauteils an einem tragenden Bauteil.

Aus der Praxis ist bekannt, den Rohluftkanal von Lastkraftwagen an der Fahrerhausrückwand zu befestigen. Der Rohluftkanal wird nachfolgend auch als Luftansaugschacht oder Rohluftschacht bezeichnet. Zur schwingungstechnischen Entkopplung des Luftansaugschachts vom Fahrerhaus wird dieser mit Gummi-Metall-Puffern an der Fahrerhausrückwand befestigt.

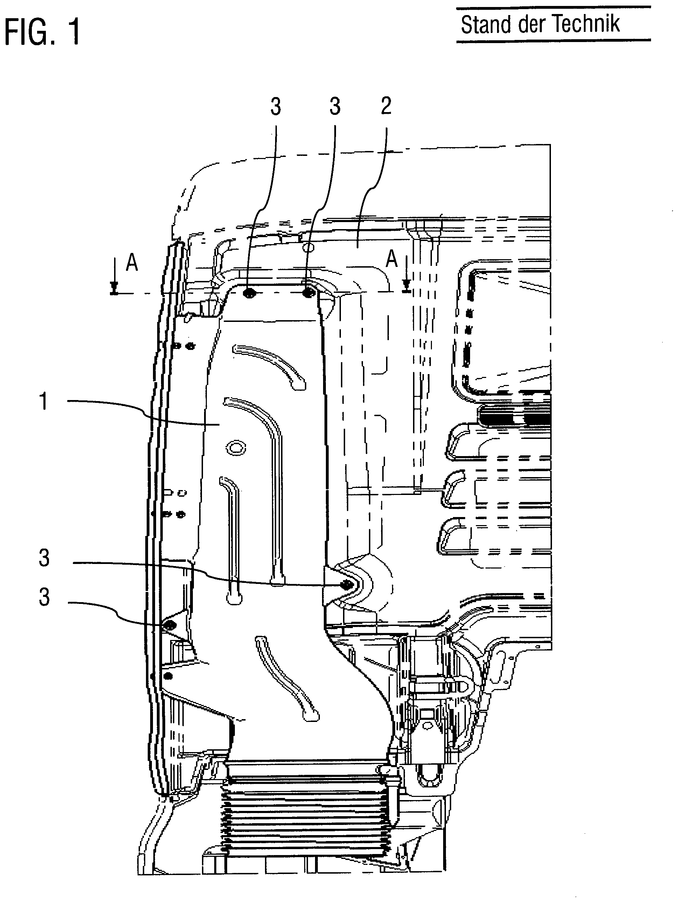

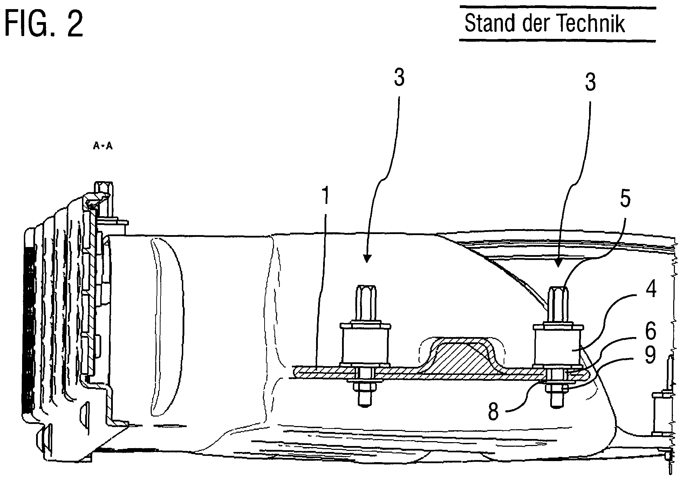

Dies ist beispielhaft in Figur 1 dargestellt, die eine Sicht in Fahrtrichtung auf die Rückwand 2 des Fahrerhauses eines Lastkraftwagens zeigt. Mit dem Bezugszeichen 1 ist der Luftansaugschacht bezeichnet, der an der Fahrerhausrückwand an den vier Verschraubungsstellen 3 befestigt wird. Figur 2 zeigt eine Schnittansicht der Verschraubungsstelle 3 entlang der Linie A-A der Figur 1. Die beiden Gummi-Metall-Puffer 4 dienen als elastische Auflieger zwischen der Fahrerhausrückwand 2 und dem Luftansaugschacht 1. Hierbei werden die Gummi-Metall-Puffer 4 zunächst mithilfe eines Steckschlüssels und einem definierten Drehmoment in die an der Fahrerhausrückwand 2 integrierten Einnietmuttern 5 eingeschraubt. Anschließend wird der Luftansaugschacht 1 an die Gummi-Metall-Puffer 4 gehängt, ausgerichtet und durch jeweils eine Mutter 9, aufweisend eine Unterlegscheibe 8, mit selbigem Werkzeug oder einem separaten Werkzeug festgezogen.

Bei diesem bekannten Befestigungsverfahren des Rohluftkanals 1 an der Fahrerhausrückwand 2 wurde vermehrt festgestellt, dass sich die Gummi-Metall-Puffer 4 während des Verschraubungsvorgangs einmalig um bis zu 180 Grad um ihre Längsachse verdrehen. Nach Absetzen des Steckschlüssels entspannt sich die Verformung auf ca. 45 Grad. Die Folgen einer derartigen Verdrehung sind eine negative Beeinflussung der dämpfenden Eigenschaften des Gummi-Metall-Puffers 4 sowie eine Einschränkung der Lebensdauer des Gummi-Metall-Puffers 4.

Aus der Offenlegungsschrift DE 10 2008 050 143 A1 ist ein Schwingungsdämpfer zum Einbringen in eine Schraubverbindung zwischen zwei Bauteilen bekannt, welcher über eine gegenüber den übrigen Komponenten des Schwingungsdämpfers drehbar angeordnete Schraube verfügt. Durch die vorgeschlagene Bauweise kann die Schraube in ein Bauteil eingeschraubt werden, ohne dass es zu relativen Drehbewegungen zwischen dem Schwingungsdämpfer und der Oberfläche des Bauteils kommt. Hierdurch wird zwar ein Beschädigen der Oberfläche beim Einbau vermieden, das Problem des Verdrehens des Schwingungsdämpfers wird allerdings nicht gelöst.

Es ist somit eine Aufgabe der Erfindung, eine verbesserte Befestigungsvorrichtung bereitzustellen, mit der Nachteile herkömmlicher Techniken vermieden werden können. Die Aufgabe der Erfindung ist es insbesondere, eine Befestigungsvorrichtung zur Befestigung eines Kunststoffbauteils an einem tragenden Bauteil bereitzustellen, bei der ein Gummi-Metall-Puffer 4 als elastischer Auflieger zwischen dem tragenden Bauteil und dem Kunststoffbauteil angeordnet ist, wobei bei der Verschraubung die vorgenannte Verdrehung des Gummi-Metall-Puffers zuverlässig vermieden werden kann. Eine weitere Aufgabe der Erfindung ist es, ein verbessertes Verfahren zum Befestigen eines Kunststoffbauteils an einem tragenden Bauteil, bei dem das Kunststoffbauteil durch eine Verschraubung am tragenden Bauteil befestigt und ein Gummi-Metall-Puffer als elastischer Auflieger zwischen dem tragenden Bauteil und dem Kunststoffbauteil angeordnet wird, bereitzustellen, mit dem Nachteile herkömmlicher Verfahren vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird eine Befestigungsvorrichtung zur Befestigung eines Kunststoffbauteils an einem tragenden Bauteil bereitgestellt. Die Befestigungsvorrichtung umfasst in an sich in bekannter Weise ein Kunststoffbauteil, das durch eine Verschraubung am tragenden Bauteil befestigt ist, und einen Gummi-Metall-Puffer, der vorzugsweise als elastischer Auflieger zwischen dem tragenden Bauteil und dem Kunststoffbauteil angeordnet ist.

Sogenannte Gummi-Metall-Puffer sind aus dem Stand der Technik bekannt. Hierbei handelt es sich um elastische Auflieger, welche zur Absorption von Schwingungen entlang der Längsachse des Gummi-Metall-Puffers bestimmt sind. Gummi-Metall-Puffer bestehen üblicherweise aus zwei Metallscheiben und einem zwischen den beiden Metallscheiben angeordneten Gummiteil. Die Härte des Gummiteils kann im Hinblick auf die Schwingungsdämpfung optimiert und geeignet ausgelegt werden. Die beiden Metallscheiben sind in der Regel durch Vulkanisierung fest mit dem Gummiteil verbunden. In der Mitte jeder Scheibe kann ein Gewindeloch vorgesehen sein. Alternativ kann auch bereits ein Gewindeschaft, der in axialer Richtung durch die Metallscheiben und das Gummiteil verläuft, vorgesehen sein. Derartige Metallpuffer eignen sich insbesondere zur Lagerung leichter und mittelschwerer Anlagen. In dem hervorgehobenen Anwendungsfall der Erfindung, bei dem ein Luftansaugschacht an der Rückseite eines Fahrerhauses befestigt wird, ist die Hauptaufgabe des Gummi-Metall-Puffers, die Übertragung von Fahrerhausschwingungen auf die Verankerung des Luftansaugschachts zu verhindern oder zumindest zu reduzieren.

Im Rahmen der Erfindung wurde festgestellt, dass die vorstehend beschriebene Verdrehung des Gummi-Metall-Puffers bei der Verschraubung durch eine Drehung der im Luftansaugschacht 1 eingepressten Metallbuchse 6 verursacht wird. Die Metallbuchse 6 dreht sich bei der Verschraubung relativ zum Luftansaugschacht 1 und zwingt dem daran aufliegenden Gummi-Metall-Puffer 4 dadurch ein Moment auf.

Gemäß dem ersten Gesichtspunkt wird die erfindungsgemäße Aufgabe dadurch gelöst, dass die Befestigungsvorrichtung mindestens eine Metallspitze aufweist, die zwischen dem Gummi-Metall-Puffer und dem Kunststoffbauteil angeordnet ist. Die mindestens eine Metallspitze ragt von einer Metallscheibe in Richtung des Kunststoffbauteils ab und greift im am tragenden Bauteil verschraubten Zustand des Kunststoffbauteils zumindest teilweise in eine Oberfläche des Kunststoffbauteils ein. Die mindestens eine Metallspitze bildet eine formschlüssige Verdrehsicherung mit dem Kunststoffbauteil aus bzw. ist so angeordnet, dass sie beim Verschrauben eine Relativdrehung des Gummi-Metall-Puffers, insbesondere des Gummiteils, zum tragenden Bauteil verhindert. Vorzugsweise sind mehrere derartige Metallspitzen vorgesehen. Alle nachfolgenden Ausführungen, bei denen Ausführungsvarianten unter Verwendung des Begriffes Metallspitzen beschrieben werden, gelten auch für den allgemeinen Fall, dass nur eine Metallspitze vorgesehen ist, auch wenn dies nicht explizit ausgeführt ist.

Der Begriff Metallspitze soll auch Dorne oder Zinken umfassen, die eine größere Härte als das Kunststoffbauteil aufweisen und sich so während des Befestigungsvorgangs in das Kunststoffbauteil drücken können, wodurch während des Befestigungsvorgangs ein Formschluss mit dem Kunststoffbauteil ausgebildet wird. Die Metallspitzen sind vorzugsweise als kantige Metallspitzen ausgeführt. Die Höhe der Metallspitzen kann gering ausfallen, d. h., die Metallspitzen können mit geringer Höhe von der Metallscheibe abragen. Das Eindringen in den Kunststoff des Kunststoffbauteils hat keine bzw. nur sehr geringe Auswirkungen auf die Vorspannkraft der Verbindung.

Gemäß einer bevorzugten Ausführungsform der Erfindung wird im Vergleich zu einer herkömmlichen Befestigungsvorrichtung eine zusätzliche Metallscheibe bereitgestellt, von der die Metallspitzen abragen und die auf einer Metallscheibe des Gummi-Metall-Puffers aufliegt. Die zusätzliche Metallscheibe mit den Metallspitzen liegt auf derjenigen Metallscheibe des Gummi-Metall-Puffers auf, die auf der dem Kunststoffbauteil zugewandten Seite des Gummi-Metall-Puffers angeordnet ist. Diese Ausgestaltungsform bietet den Vorzug, dass lediglich ein zusätzliches kostengünstiges Bauteil in Form einer Metallscheibe mit angeformten Spitzen bereitgestellt werden muss, um eine erfindungsgemäße Verdrehsicherung bereitzustellen.

Gemäß einer alternativen bevorzugten Ausgestaltungsform ragen die Metallspitzen von einer der beiden Metallscheiben des Gummi-Metall-Puffers ab, und zwar von derjenigen Metallscheibe, die dem Kunststoffbauteil im verschraubten Zustand zugewandt ist. Gemäß dieser Variante wird keine zusätzliche Metallscheibe benötigt, sondern der Gummi-Metall-Puffer wird entsprechend modifiziert, dergestalt, dass eine seiner Metallscheiben die angeformten Spitzen aufweist. Dies bietet den Vorteil, dass der Produktionsablauf unverändert bleibt, da kein zusätzliches Bauteil bei der Verschraubung integriert werden muss.

Eine weitere alternative Ausgestaltungsform sieht vor, dass die Metallscheibe, von der die Metallspitzen abragen, stoffschlüssig am Kunststoffbauteil befestigt ist. Beispielsweise kann die Metallscheibe bereits während des Spritzgießens des Kunststoffbauteils an diesem befestigt werden, indem die Metallscheibe beim Spritzgießen des Kunststoffbauteils zumindest teilweise kunststoffumspritzt wird.

Eine besonders vorteilhafte Variante der vorgenannten Ausgestaltungsformen sieht vor, dass die Metallspitzen an einem äußeren Bereich der Metallscheibe, insbesondere auf einem äußeren Rand der Metallscheibe, angeordnet sind. Beispielsweise können die Metallspitzen auf einem äußeren Rand der Metallscheibe gleichmäßig verteilt angeordnet sein. Durch diese Anordnung am äußeren Rand der Metallscheibe befinden sich die Metallspitzen bezogen auf die Längsachse des Gummi-Metall-Puffers auf einem großen Teilkreis. Hierdurch können schon mit geringen Kräften verhältnismäßig hohe Anzugsmomente erzielt werden. Ein weiterer Vorteil ist, dass bei einer derartigen Anordnung der Metallspitzen die Lage des Gummi-Metall-Puffers in Bezug auf das Loch bzw. die Buchse des Kunststoffbauteils etwas variiert werden kann. Dies ermöglicht ein Ausrichten des Kunststoffschachtes nach Bedarf.

Gemäß einem weiteren Ausführungsbeispiel kann die Metallscheibe, von der die Metallspitzen abragen, mindestens eine Fixierungsnase und/oder ein Verspannelement aufweisen, die und/oder das an einem äußeren Rand der Metallscheibe in Richtung des Gummi-Metall-Puffers abragt. Die Fixierungsnase und/oder das Verspannelement kann im am tragenden Bauteil verschraubten Zustand des Kunststoffbauteils an einem Umfangsbereich des Gummikörpers des Gummi-Metall-Puffers anliegen und diesen auf diese Weise zusätzlich zu sichern. Die Fixierungsnase und/oder das Verspannelement sichert die Metallscheibe gegen ein seitliches Verrutschen in Bezug auf das Gummiteil des Gummi-Metall-Puffers.

Ferner kann die Metallscheibe, von der die Metallspitzen abragen, eine zentrale Öffnung aufweisen, durch die im am tragenden Bauteil verschraubten Zustand des Kunststoffbauteils ein Schraubenschaft der Verschraubung geführt ist. Ferner kann in das Kunststoffbauteil eine Metallbuchse eingepresst sein, durch die im am tragenden Bauteil verschraubten Zustand des Kunststoffbauteils ein Schraubenschaft der Verschraubung geführt ist.

Gemäß einem besonders bevorzugten Ausführungsbeispiel ist das Kunststoffbauteil ein Rohluftkanal und/oder ein Luftansaugschacht für Frischluft eines Nutzfahrzeugs. Ferner kann das tragende Bauteil eine Fahrerhausrückwand eines Nutzfahrzeugs, insbesondere eines Lastkraftwagens, sein. Es wird jedoch betont, dass die Erfindung nicht auf diese beispielhaft hervorgehobene Anwendung beschränkt ist. Vielmehr kann die erfindungsgemäße Befestigungsvorrichtung mit den zusätzlich vorgesehenen Metallspitzen zur Ausbildung einer Verdrehsicherung jeglicher Arten von Kunststoffbauteilen genutzt werden, die an einem tragenden Bauteil unter Verwendung eines Gummi-Metall-Puffers befestigt werden.

Die Erfindung betrifft ferner ein Fahrzeug, insbesondere ein Nutzfahrzeug, beispielsweise einen Lastkraftwagen, eine land- und forstwirtschaftliche Maschine, eine Baumaschine oder einen Personenkraftwageninsbesondere einen Lastkraftwagen, mit einer Befestigungsvorrichtung wie in diesem Dokument beschrieben. Gemäß einem zweiten Gesichtspunkt der Erfindung wird ferner ein Verfahren zum Befestigen eines Kunststoffbauteils an einem tragenden Bauteil bereitgestellt, bei dem das Kunststoffbauteil durch eine Verschraubung am tragenden Bauteil befestigt und ein Gummimetallpuffer als elastischer Auflieger zwischen dem tragenden Bauteil und dem Kunststoffbauteil angeordnet wird. Gemäß dem Verfahren werden Metallspitzen, die zwischen Gummi-Metall-Puffer und Kunststoffbauteil angeordnet sind und von einer Metallscheibe in Richtung des Kunststoffbauteils abragen und im am tragenden Bauteil verschraubten Zustand des Kunststoffbauteils zumindest teilweise in eine Oberfläche des Kunststoffbauteils eingreifen, verwendet, um dadurch eine formflüssige Verdrehsicherung auszubilden.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale betreffend die Metallspitzen gelten somit auch für das Verfahren.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Rückwand eines Nutzfahrzeugfahrerhauses mit einem daran befestigten Rohluftschacht;
- Figur 2: eine Schnittansicht entlang der Linie A-A der Figur 1;
- Figur 3: eine perspektivische Explosionsdarstellung einer Befestigungsvorrichtung gemäß einem Ausführungsbeispiel der Erfindung;
- Figur 4: eine perspektivische Ansicht einer Metallscheibe mit Metallspitzen gemäß einem Ausführungsbeispiel der Erfindung;
- Figur 5: eine Seitenansicht eines Gummi-Metall-Puffers mit zusätzlicher Metallscheibe gemäß einem Ausführungsbeispiel der Erfindung; und
- Figur 6: eine Seitenansicht eines Gummi-Metall-Puffers gemäß einem Ausführungsbeispiel der Erfindung.

Gleiche oder funktional äquivalente Elemente sind in allen Figuren mit denselben Bezugszeichen bezeichnet.

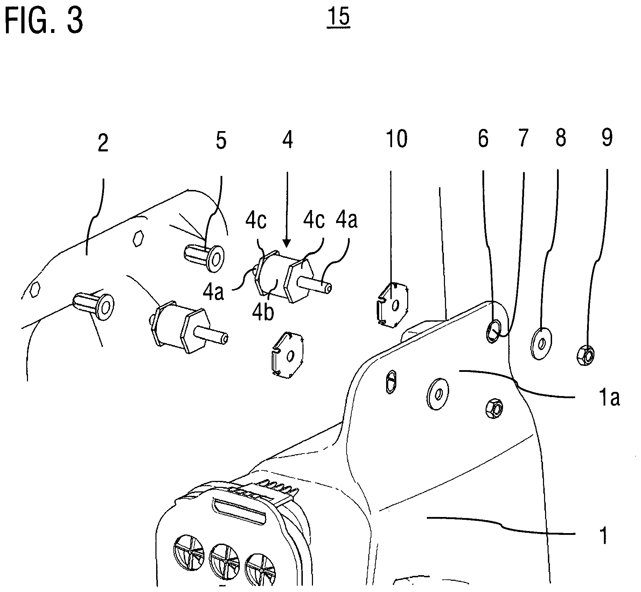

Figur 3 zeigt eine perspektivische Explosionsdarstellung einer Befestigungsvorrichtung 15 gemäß einem Ausführungsbeispiel der Erfindung. Die Befestigungsvorrichtung 15 dient zur Befestigung eines Kunststoffbauteils 1, hier eines Kunststoffluftansaugschachts 1 an einem tragenden Bauteil 2. Das tragende Bauteil ist in dem gezeigten Beispiel eine Fahrerhausrückwand eines Nutzfahrzeugs. Hierzu weist der Luftansaugschacht 1 an seinem oberen Ende einen verjüngten Abschnitt 1a auf, der zwei Durchgangsöffnungen 7 aufweist. In jeder der Durchgangsöffnungen 7 ist eine Metallbuchse 6 eingepresst.

Zur schwingungstechnischen Entkopplung des Luftansaugschachts 1 vom Fahrerhaus wird der Luftansaugschacht mit Gummi-Metall-Puffern 4 an der Fahrerhausrückwand 2 befestigt. Die hier verwendeten Gummi-Metall-Puffer 4 bestehen jeweils aus zwei Metallscheiben 4c und einem zwischen den beiden Metallscheiben 4c angeordneten zylinderförmigen Gummiteil bzw. Gummikörper 4b. Die beiden Metallscheiben 4c sind durch Vulkanisierung fest mit dem Gummiteil 4b verbunden. In der Mitte jeder Scheibe 4c ist ein Gewindeloch vorgesehen. Ein Schraubenschaft 4a erstreckt sich durch diese beiden Gewindelöcher und durch ein entsprechendes Langloch des Gummiteils 4b.

Die Befestigungsvorrichtung umfasst ferner für jede der Verschraubungsstellen eine Nietmutter, die in die Fahrerhausrückwand 2 integriert wird, sowie eine Mutter 9 und eine Unterlegscheibe 8. Eine Befestigungsvorrichtung bestehend aus den vorstehenden Komponenten 1, 2 und 4 bis 9 ist an sich aus der Praxis bekannt.

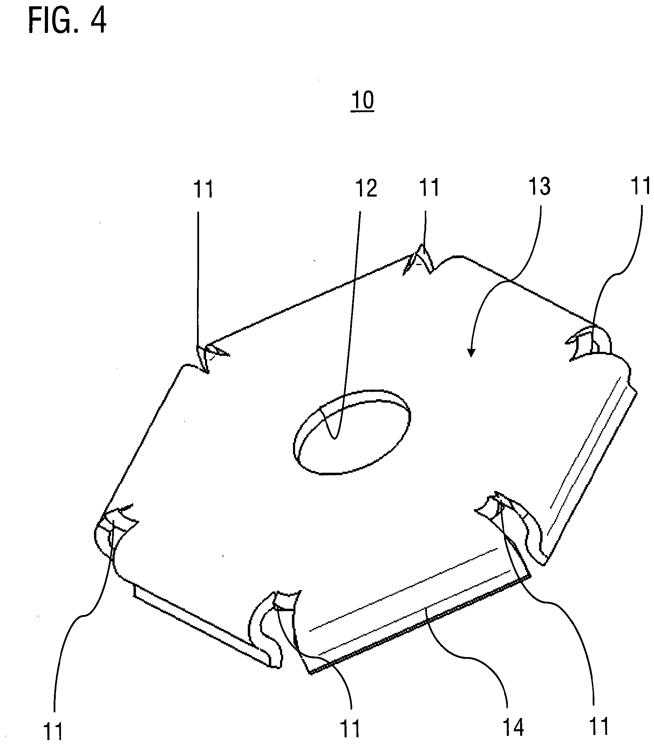

Gemäß der in Figur 3 gezeigten Ausführungsvariante der Erfindung umfasst die Befestigungsvorrichtung 15 neben diesen an sich bekannten Komponenten zusätzlich eine Metallscheibe 10, die zwischen dem Gummimetallpuffer 4 und dem Kunststoffbauteil 1 angeordnet ist. Die Metallscheibe 10 ist in Figur 4 nochmals in einer größeren Darstellung gezeigt.

Die Metallscheibe 10 weist mehrere Metallspitzen 11 auf, die auf einem äußeren Rand der Metallscheibe 10 gleichmäßig verteilt angeordnet sind. Die gleichmäßige Verteilung ist jedoch nicht zwingend erforderlich. Vorliegend umfasst die Metallscheibe 10 sechs derartige kantige Metallspitzen 11 niedriger Höhe, die von einer planen Anlagefläche 13 abragen. Die plane Anlagefläche 13 überdeckt im verschraubten Zustand eine Montagestelle an dem Kunststoffbauteil 1. Die Metallscheibe 10 umfasst ferner eine zentrale Durchgangsöffnung 12, durch die der Verschraubungsschaft 4a geführt wird.

Wird nun diese Metallscheibe 10 so zwischen dem Gummi-Metall-Puffer 4 und dem Kunststoffluftansaugschacht 1 angeordnet, dass die Metallspitzen 11 in Richtung des Kunststoffluftansaugschachts 1 abragen, werden die Metallspitzen bei der Verschraubung in die Oberfläche des Kunststoffluftansaugschachts 1 eingedrückt und bilden dadurch eine formschlüssige Verdrehsicherung aus.

Das Befestigungsverfahren zum Befestigen des Luftansaugschachts 1 an der Fahrerhausrückwand 2 unterscheidet sich somit vom herkömmlichen Befestigungsverfahren gemäß dieser Ausführungsvariante durch die zusätzliche Verwendung der Metallscheibe 10.

Zunächst werden in an sich bekannter Weise die Einnietmuttern 5 in die Fahrerhausrückwand 2 integriert. Anschließend wird die Metallscheibe 10 zwischen dem Gummi-Metall-Puffer 4 und dem Luftansaugschacht 1 angeordnet und auf den entsprechenden Schraubenschaft 4a gesteckt.

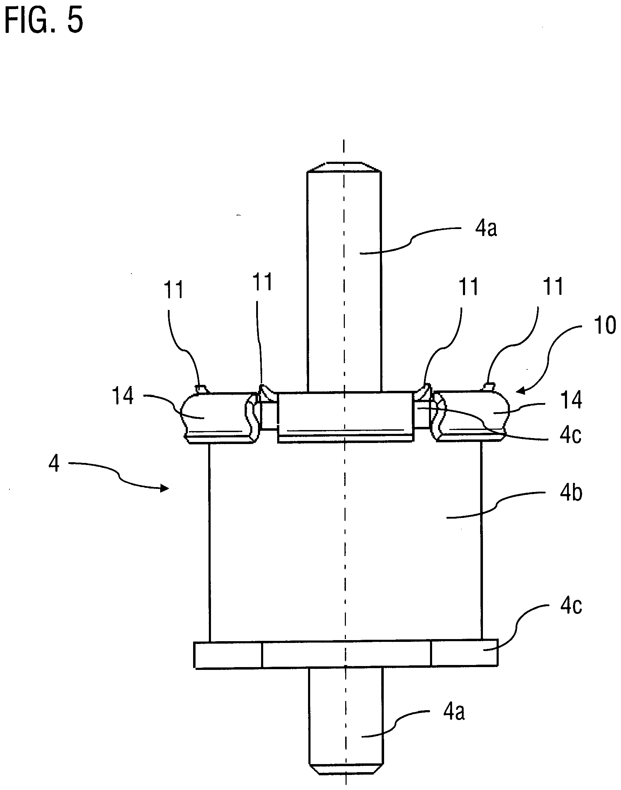

Dies ist in Figur 5 gezeigt. Die Metallscheibe 10 liegt auf einer der Metallplatten 4c des Gummi-Metall-Puffers 4 auf. In diesem Zustand ragen die Metallspitzen 11 der Metallscheibe 10 nach oben bzw. in Richtung des Luftansaugschachts 1 ab. Ferner ist in den Figuren 4 und 5 zu erkennen, dass am äußeren Rand der Metallscheibe 10 jeweils zwischen zwei abragenden Metallspitzen 11 eine Fixierungsnase 14 angeordnet ist, die sich in Bezug auf die Metallspitzen 11 in die entgegengesetzte Richtung von der Scheibe 10 erstreckt, d. h. in Richtung des Gummiteils 4b. Im am tragenden Bauteil verschraubten Zustand des Luftansaugschachts 1 liegen die Fixierungsnasen 14 an einem Umfangsbereich des Gummi-Metall-Puffers an.

Die Gummi-Metall-Puffer 4 werden dann mithilfe eines Steckschlüssels und eines definierten Drehmoments in die an der Fahrerhausrückwand 2 integrierten Einnietmuttern 2 eingeschraubt. Anschließend wird der Luftansaugschacht 1 an die Gummi-Metall-Puffer 4 gehängt, ausgerichtet und durch jeweils eine Mutter 9 und Unterlegscheibe mit selbigem Werkzeug oder einem separaten Werkzeug festgezogen. Bei diesem Festziehen drücken sich nun die Metallspitzen 11 in die Oberfläche des Luftansaugschachts 1 und bilden eine formflüssige Verdrehsicherung aus. Auf diese Weise können die Gummi-Metall-Puffer 4 verspannungsfrei eingebaut werden. Die Gefahr einer Lebensdauerreduzierung der Gummi-Metall-Puffer aufgrund einer Verdrehung bei der Verschraubung wird somit vermieden. Da die Metallspitzen 11 während des Befestigungsvorgangs einen Formfluss (Formschluss) mit dem Kunststoffbauteil 1 erzeugen, folgt die Verbindung zwischen dem Gummi-Metall-Puffer 4 und dem zu fixierenden Bauteil 1 direkt und nicht wie bisher über den Reibschluss Gummi-Metall-Puffer 4 zu Metallbuchse 6 zu Kunststoffbauteil 1.

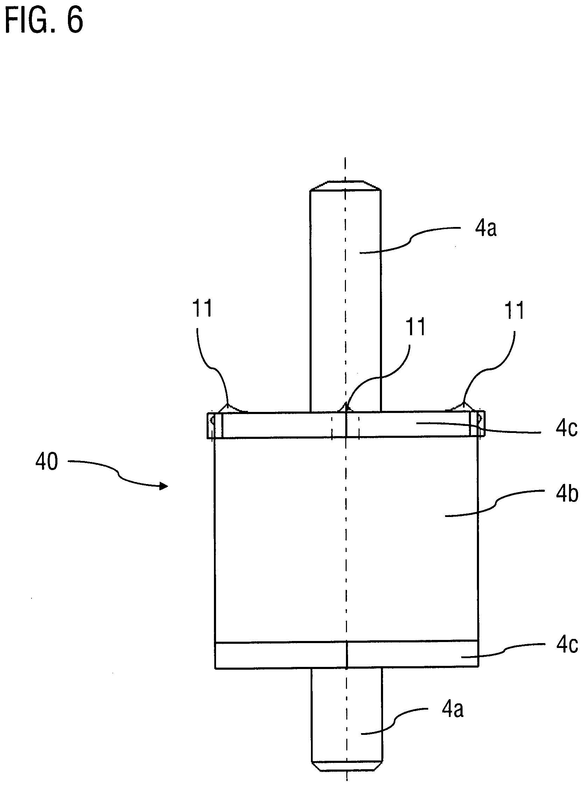

Gemäß einer weiteren Ausführungsvariante können die Metallspitzen jedoch auch integraler Bestandteil des Gummi-Metall-Puffers sein, was in Figur 6 dargestellt ist. Gemäß dieser Ausführungsvariante unterscheidet sich der Gummi-Metall-Puffer 40 von einem herkömmlichen Gummi-Metall-Puffer dadurch, dass eine der Metallscheiben 4c des Gummi-Metall-Puffers nach oben abragende Spitzen 11 aufweist, die auf einem äußeren Rand der Metallscheibe 4c gleichmäßig verteilt angeordnet sind. Die gleichmäßige Verteilung ist jedoch wiederum nicht zwingend erforderlich. Gemäß dieser Variante kann auf eine zusätzliche Metallscheibe 10 verzichtet werden. Ferner bleibt der Produktionsablauf im Vergleich zu einem herkömmlichen Verfahren unverändert, mit der Ausnahme, dass der erfindungsgemäße Gummi-Metall-Puffer 40 verwendet wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Kunststoffbauteil, z. B. Luftansaugschacht
- 2: Tragendes Bauteil, z. B. Fahrerhausrückwand
- 3: Verschraubungsstelle
- 4, 40: Gummi-Metall-Puffer
- 4a: Schaft
- 4b: Gummiteil
- 4c: Metallscheibe
- 5: Einnietmutter
- 6: Metallbuchse
- 7: Durchgangsöffnung
- 8: Scheibe
- 9: Mutter
- 10: Metallscheibe
- 11: Metallspitze
- 12: Zentrale Durchgangsöffnung
- 13: Anliegefläche
- 14: Fixiernase
- 15: Befestigungsvorrichtung

## Patentansprüche

1. Befestigungsvorrichtung zur Befestigung eines Kunststoffbauteils an einem tragenden Bauteil, umfassend
(a) ein Kunststoffbauteil (1), das durch eine Verschraubung am tragenden Bauteil (2) befestigbar ist;
(b) einen Gummi-Metall-Puffer (4), der als elastischer Auflieger zwischen dem tragenden Bauteil (2) und dem Kunststoffbauteil (1) anordenbar ist, weiter umfassend
(c) mindestens eine Metallspitze (11), die zwischen dem Gummi-Metall-Puffer (4) und dem Kunststoffbauteil (1) angeordnet ist, von einer Metallscheibe (10; 4c) in Richtung des Kunststoffbauteils (1) abragt und im am tragenden Bauteil (2) verschraubten Zustand des Kunststoffbauteils (1) zumindest teilweise in eine Oberfläche des Kunststoffbauteils (1) eingreift.

2. Befestigungsvorrichtung nach Anspruch 1, **dadurch gekennzeichnet, dass** die Metallscheibe (10), von der die mindestens eine Metallspitze (11) abragt, auf einer Metallscheibe (4c) des Gummi-Metall-Puffers (4) aufliegt.

3. Befestigungsvorrichtung nach Anspruch 1, **dadurch gekennzeichnet, dass** die Metallscheibe, von der die mindestens eine Metallspitze (11) abragt, eine Metallscheibe (4c) des Gummi-Metall-Puffers (4) ist.

4. Befestigungsvorrichtung nach Anspruch 1, **dadurch gekennzeichnet, dass** die Metallscheibe, von der die mindestens eine Metallspitze (11) abragt,
(a) stoffschlüssig am Kunststoffbauteil (1) befestigt ist; und/oder
(b) beim Spritzgießen des Kunststoffbauteils (1) zumindest teilweise kunststoffumspritzt wurde.

5. Befestigungsvorrichtung nach einem der vorhergehenden Ansprüche, **dadurch gekennzeichnet,**
(a) **dass** die mindestens eine Metallspitze (11) an einem äußeren Bereich der Metallscheibe (10; 4c), insbesondere auf einem äußeren Rand der Metallscheibe, angeordnet ist; und/oder
(b) **dass** mehrere Metallspitzen (11) vorgesehen sind, die auf einem äußeren Rand der Metallscheibe (10; 4c), vorzugsweise gleichmäßig verteilt, angeordnet sind.

6. Befestigungsvorrichtung nach einem der vorhergehenden Ansprüche, **dadurch gekennzeichnet, dass** die Metallscheibe (10), von der die mindestens eine Metallspitze (11) abragt, mindestens eine Fixierungsnase (14) und/oder ein Verspannelement aufweist, die an einem äußeren Rand der Metallscheibe in Richtung des Gummi-Metall-Puffers (4) abragen.

7. Befestigungsvorrichtung nach einem der vorhergehenden Ansprüche, **dadurch gekennzeichnet,**
(a) **dass** die Metallscheibe (10; 4c), von der die mindestens eine Metallspitze (11) abragt, eine zentrale Öffnung (12) aufweist, durch die im am tragenden Bauteil verschraubten Zustand des Kunststoffbauteils ein Schraubenschaft (4a) der Verschraubung geführt ist;
(b) **dass** in das Kunststoffbauteil (1) eine Metallbuchse (6) eingepresst ist, durch die im am tragenden Bauteil verschraubten Zustand des Kunststoffbauteils ein Schraubenschaft (4a) der Verschraubung geführt ist.

8. Befestigungsvorrichtung nach einem der vorhergehenden Ansprüche, **dadurch gekennzeichnet,**
(a) **dass** das Kunststoffbauteil (1) ein Rohluftkanal und/oder Ansaugschacht ist; und
(b) **dass** das tragende Bauteil (2) eine Fahrerhausrückwand eines Nutzfahrzeuges, insbesondere eines Lastkraftwagens, ist.

9. Kraftfahrzeug, insbesondere Nutzfahrzeug, eine land- und/oder forstwirtschaftliche Maschine, eine Baumaschine oder ein Personenkraftwagen, mit einer Befestigungsvorrichtung nach einem der vorhergehenden Ansprüche.

10. Verfahren zum Befestigen eines Kunststoffbauteils an einem tragenden Bauteil, bei dem das Kunststoffbauteil (1) durch eine Verschraubung am tragenden Bauteil (2) befestigt und ein Gummi-Metall-Puffer (4) als elastischer Auflieger zwischen dem tragenden Bauteil (2) und dem Kunststoffbauteil (1) angeordnet wird, umfassend die Verwendung von mindestens einer Metallspitze (11), die zwischen Gummi-Metall-Puffer (4) und Kunststoffbauteil (1) angeordnet ist, von einer Metallscheibe (10; 4c) in Richtung des Kunststoffbauteils (1) abragt und im am tragenden Bauteil verschraubten Zustand des Kunststoffbauteils (1) zumindest teilweise in eine Oberfläche des Kunststoffbauteils (1) eingreift.

11. Verfahren nach Anspruch 10, **dadurch gekennzeichnet,**
(a) **dass** das Kunststoffbauteil (1) ein Rohluftkanal und/oder Ansaugschacht ist; und
(b) **dass** das tragende Bauteil (2) eine Fahrerhausrückwand eines Nutzfahrzeuges, insbesondere eines Lastkraftwagens, ist.

## Claims

1. A fastening device for fastening a plastics component to a load-bearing component, comprising
(a) a plastics component (1) which can be fastened to the load-bearing component (2) by a screw connection;
(b) a rubber-metal buffer (4) which can be arranged as a resilient support between the load-bearing component (2) and the plastics component (1),
further comprising
(c) at least one metal tip (11) which is arranged between the rubber-metal buffer (4) and the plastics component (1), which protrudes from a metal disk (10; 4c) in the direction of the plastics component (1), and which in the state of the plastics component (1) screwed to the load-bearing component (2) engages at least partially in a surface of the plastics component (1).

2. The fastening device according to Claim 1, **characterized in that** the metal disk (10), from which the at least one metal tip (11) protrudes, bears against a metal disk (4a) of the rubber-metal buffer (4).

3. The fastening device according to Claim 1, **characterized in that** the metal disk, from which the at least one metal tip (11) protrudes, is a metal disk (4c) of the rubber-metal buffer (4).

4. The fastening device according to Claim 1, **characterized in that** the metal disk, from which the at least one metal tip (11) protrudes,
(a) is fastened by a material connection to the plastics component (1); and/or
(b) during injection-moulding of the plastics component (1) has been at least partially injection-moulded with plastics material.

5. The fastening device according to one of the preceding claims, **characterized in that**
(a) the at least one metal tip (11) is arranged on an outer region of the metal disk (10; 4c), in particular on an outer edge of the metal disk; and/or
(b) a plurality of metal tips (11) are provided, said metal tips being arranged on an outer edge of the metal disk (10; 4c), preferably uniformly distributed.

6. The fastening device according to one of the preceding claims, **characterized in that** the metal disk (10), from which the at least one metal tip (11) protrudes, comprises at least one fixing lug (14) and/or a tensioning element which protrude on an outer edge of the metal disk in the direction of the rubber-metal buffer (4).

7. The fastening device according to one of the preceding claims, **characterized in that**
(a) the metal disk (10; 4c), from which the at least one metal tip (11) protrudes, comprises a central opening (12), a threaded shaft (4a) of the screw connection being guided therethrough in the state of the plastics component screwed to the load-bearing component;
(b) a metal bushing (6) is pressed into the plastics component (1), a threaded shaft (4a) of the screw connection being guided therethrough in the state of the plastics component screwed to the load-bearing component.

8. The fastening device according to one of the preceding claims, **characterized in that**
(a) the plastics component (1) is a primary air channel and/or suction duct; and
(b) the load-bearing component (2) is a driver's cab rear wall of a utility vehicle, in particular of a truck.

9. A motor vehicle, in particular a utility vehicle, an agricultural and/or forestry machine, a construction machine or a passenger motor vehicle comprising a fastening device according to one of the preceding claims.

10. A method for fastening a plastics component to a load-bearing component in which the plastics component (1) is fastened by a screw connection to the load-bearing component (2) and a rubber-metal buffer (4) is arranged as a resilient support between the load-bearing component (2) and the plastics component (1),
comprising the use of at least one metal tip (11) which is arranged between the rubber-metal buffer (4) and the plastics component (1), which protrudes from a metal disk (10; 4c) in the direction of the plastics component (1) and which in the state of the plastics component (1) screwed to the load-bearing component engages at least partially in a surface of the plastics component (1).

11. The method according to Claim 10, **characterized in that**
(a) the plastics component (1) is a primary air channel and/or suction duct; and
(b) the load-bearing component (2) is a driver's cab rear wall or a utility vehicle, in particular a truck.

## Revendications

1. Dispositif de fixation pour la fixation d'un composant en matière plastique sur un composant porteur, comprenant
(a) un composant en matière plastique (1) qui peut être fixé par un vissage sur le composant porteur (2) ;
(b) un tampon en caoutchouc-métal (4) qui peut être agencé en tant que support élastique entre le composant porteur (2) et le composant en matière plastique (1), comprenant en outre
(c) au moins une pointe métallique (11), qui est agencée entre le tampon en caoutchouc-métal (4) et le composant en matière plastique (1), fait saillie à partir d'un disque métallique (10 ; 4c) en direction du composant en matière plastique (1) et, à l'état vissé du composant en matière plastique (1) sur le composant porteur (2), s'engage au moins partiellement dans une surface du composant en matière plastique (1).

2. Dispositif de fixation selon la revendication 1, **caractérisé en ce que** le disque métallique (10), à partir duquel l'au moins une pointe métallique (11) fait saillie, repose sur un disque métallique (4c) du tampon en caoutchouc-métal (4).

3. Dispositif de fixation selon la revendication 1, **caractérisé en ce que** le disque métallique, à partir duquel l'au moins une pointe métallique (11) fait saillie, est un disque métallique (4c) du tampon en caoutchouc-métal (4).

4. Dispositif de fixation selon la revendication 1, **caractérisé en ce que** le disque métallique, à partir duquel fait saillie l'au moins une pointe métallique (11),
(a) est fixé sur le composant en matière plastique (1) par liaison de matière ; et/ou
(b) a été au moins partiellement surmoulé en matière plastique lors du moulage par injection du composant en matière plastique (1).

5. Dispositif de fixation selon l'une quelconque des revendications précédentes, **caractérisé en ce que**
(a) l'au moins une pointe métallique (11) est agencée sur une zone extérieure du disque métallique (10 ; 4c), notamment sur un bord extérieur du disque métallique ; et/ou
(b) plusieurs pointes métalliques (11) sont prévues, qui sont agencées sur un bord extérieur du disque métallique (10 ; 4c), de préférence réparties de manière uniforme.

6. Dispositif de fixation selon l'une quelconque des revendications précédentes, **caractérisé en ce que** le disque métallique (10), à partir duquel fait saillie l'au moins une pointe métallique (11), présente au moins un ergot de fixation (14) et/ou un composant de serrage qui font saillie sur un bord extérieur du disque métallique en direction du tampon en caoutchouc-métal (4) .

7. Dispositif de fixation selon l'une quelconque des revendications précédentes, **caractérisé en ce que**
(a) le disque métallique (10 ; 4c), à partir duquel fait saillie l'au moins une pointe métallique (11), présente une ouverture centrale (12) à travers laquelle passe une tige de vis (4a) du vissage à l'état vissé du composant en matière plastique sur le composant porteur ;
(b) une douille métallique (6) est enfoncée dans le composant en matière plastique (1), à travers laquelle passe une tige de vis (4a) du vissage à l'état vissé du composant en matière plastique sur le composant porteur.

8. Dispositif de fixation selon l'une quelconque des revendications précédentes, **caractérisé en ce que**
(a) le composant en matière plastique (1) est un canal d'air brut et/ou un puits d'aspiration ; et
(b) le composant porteur (2) est une paroi arrière de cabine de conducteur d'un véhicule utilitaire, notamment d'un camion.

9. Véhicule automobile, notamment véhicule utilitaire, machine agricole et/ou forestière, engin de chantier ou voiture particulière, avec un dispositif de fixation selon l'une quelconque des revendications précédentes.

10. Procédé de fixation d'un composant en matière plastique sur un composant porteur, dans lequel le composant en matière plastique (1) est fixé par un vissage sur le composant porteur (2) et un tampon en caoutchouc-métal (4) est agencé en tant que support élastique entre le composant porteur (2) et le composant en matière plastique (1),
comprenant
l'utilisation d'au moins une pointe métallique (11), qui est agencée entre le tampon en caoutchouc-métal (4) et le composant en matière plastique (1), fait saillie à partir d'un disque métallique (10 ; 4c) en direction de la pièce en matière plastique (1) et, à l'état vissé du composant en matière plastique (1) sur le composant porteur, s'engage au moins partiellement dans une surface du composant en matière plastique (1).

11. Procédé selon la revendication 10, **caractérisé en ce que**
(a) le composant en matière plastique (1) est un canal d'air brut et/ou un puits d'aspiration ; et
(b) le composant porteur (2) est une paroi arrière de cabine de conducteur d'un véhicule utilitaire, notamment d'un camion.
